# EUROPEAN PATENT APPLICATION

(11) **EP 2 211 252 A1**
(43) Date of publication of application: **28.07.2010**
(21) Application number: 09150790.5
(22) Date of filing: 16.01.2009
(51) Int. Cl.: G06F 3/01

(54) **Portable electronic device including tactile touch-sensitive display**

(71) Applicant: RESEARCH IN MOTION LIMITED, Waterloo, Ontario N2L 3W8 (CA)
(72) Inventor: Moosavi, Vahid, Waterloo Ontario N2L 3W8 (CA)
(74) Representative: Fennell, Gareth Charles

(57) **Abstract**

An electronic device including a base, a touch-sensitive display comprising a display device and a touch-sensitive overlay connected to a controller and disposed on the display device for detecting a touch event thereon, the touch-sensitive display connected to and moveable relative to the base, an actuating arrangement including a pad disposed between the touch-sensitive display and the base, the pad having an expandable region for expanding as a result of compression of the pad due to movement of the touch-sensitive display toward the base, a switch in communication with the expandable region for actuating as a result of expansion of the expandable region, and operational components comprising a processor connected to the controller for operation of the electronic device.

## Description

The present disclosure relates generally to portable electronic devices and rendering of screens including graphical user interfaces.

Electronic devices, including portable electronic devices, have gained widespread use and can provide a variety of functions including, for example, telephonic, electronic messaging and other personal information manager (PIM) application functions. Portable electronic devices can include several types of devices including mobile stations such as simple cellular telephones, smart telephones, wireless PDAs, and laptop computers with wireless 802.11 or Bluetooth capabilities. These devices run on a wide variety of networks from data-only networks such as Mobitex and DataTAC to complex voice and data networks such as GSM/GPRS, CDMA, EDGE, UMTS and CDMA2000 networks.

Devices such as PDAs or smart telephones are generally intended for handheld use and ease of portability. Smaller devices are generally desirable for portability. Touch screen devices constructed of a display, such as a liquid crystal display, with a touch-sensitive overlay are useful on such handheld devices as such handheld devices are small and are therefore limited in space available for user input and output devices. Further, the screen content on the touch screen devices can be modified depending on the functions and operations being performed.

Touch-sensitive displays are constructed of a display, such as a liquid crystal display, with a touch-sensitive overlay. These devices suffer from inherent disadvantages relating to user interaction and response, however. For example, such devices fail to provide user-desirable tactile feedback for positively indicating input. Poor or no tactile feedback causes difficulty in discerning whether or not an intended input has been received and can result in receipt of erroneous input at the device, for example, by additional or double input. Further improvements for tactile feedback and control of such feedback are desirable, however.

### GENERAL

According to one aspect, there may be provided an electronic device. The electronic device may comnprise a base, a touch-sensitive display comprising a display device and a touch-sensitive overlay connected to a controller and disposed on the display device for detecting a touch event thereon, the touch-sensitive display connected to and moveable relative to the base. The electronic device may also comprise an actuating arrangement including a pad disposed between the touch-sensitive display and the base, the pad having an expandable region for expanding as a result of compression of the pad due to movement of the touch-sensitive display toward the base. A switch is in communication with the expandable region for actuating as a result of expansion of the expandable region and operational comprising a processor are connected to the controller for operation of the electronic device.

The pad may comprise a bag containing a fluid. The expandable region may comprise a thin-walled portion of the bag for deforming. A remainder of the bag may be inhibited from expanding by a surrounding housing.

The pad may be elastically deformable.

The actuating arrangement may comprise an actuating member intermediate the expandable region and the switch, the intermediate member for actuating the switch due to expansion of the expandable region.

The expandable region may be located along a side of the pad such that the expandable region expands generally perpendicularly to the direction of movement of the touch-sensitive display in relation to the base.

The switch may be a dome-type switch. A further switch may be in communication with the expandable region for actuating as a result of further expansion of the expandable region. The further switch may be a further dome-type switch and may be larger than the other switch.

Prefereably, the switch and the touch-sensitive display that is moveable with respect to the base provides the user with a desirable tactile feedback during a touch event as sufficient force applied on the touch-sensitive display to overcome the bias into the rest position by the actuating arrangement can result in movement of the touch-sensitive display and actuation of the switch. The switch can be actuated as a result of a force applied anywhere on the touch-sensitive display causing movement of the touch-sensitive display and a resulting transfer of force to the switch. A second switch can be included that requires a further expansion of the expandable region caused by further displacement of the touch-sensitive display. Thus, when selecting a sequence of multiple virtual buttons, for example, during typing on the touch-sensitive display, depression of the touch-sensitive display may occur as a result of, for example a thumb depressing the touch-sensitive display to select a virtual button, prior to lifting the opposite thumb from selection of a previous button on the touch-sensitive display. Thus, there is an overlap in time during which both thumbs contact and depress the touch-sensitive display. The second switch can be used to provide the user with tactile feedback when depressing the touch-sensitive display to select a button when the touch-sensitive display is still depressed from selection of a previous button. A second larger switch is actuated by further expansion of the expandable region so that a greater force and greater displacement of the touch-sensitive display causes actuation of the second switch, avoiding actuation of the second switch at the same time as the first switch, regardless of the location of application of force to the touch-sensitive display. Further, tactile feedback can be provided when lifting either or both thumbs from the touch-sensitive display.

The tactile feedback provides a positive indication of input, permitting the user to discern when an intended input has been received and reducing chances of erroneous input at the device, for example, by additional or double input.

### BRIEF DESCRIPTION OF THE DRAWINGS

Embodiments of the present disclosure will now be described, by way of example only, with reference to the attached Figures, wherein:

Figure 1 is a simplified block diagram of components including internal components of a portable electronic device according an aspect of an embodiment;

Figure 2 is a front view of an example of a portable electronic device including a virtual keyboard shown in a landscape orientation;

Figure 3A is a simplified sectional side view of the portable electronic device of Figure 2 (not to scale), with a switch shown in a rest position;

Figure 3B is view similar to Figure 3A, with the switch shown in an actuated position;

Figure 4A is a simplified sectional side view of the portable electronic device according to another embodiment (not to scale), with switches shown each shown in a rest position;

Figure 4B is view similar to Figure 4A, with one switch shown in an actuated position; and

Figure 5 is front view showing an actuating arrangement of the portable electronic device of Figure 4A.

### DESCRIPTION OF PREFERRED EMBODIMENTS

It will be appreciated that for simplicity and clarity of illustration, where considered appropriate, reference numerals may be repeated among the figures to indicate corresponding or analogous elements. In addition, numerous specific details are set forth in order to provide a thorough understanding of the embodiments described herein. However, it will be understood by those of ordinary skill in the art that the embodiments described herein may be practiced without these specific details. In other instances, well-known methods, procedures and components have not been described in detail so as not to obscure the embodiments described herein. Also, the description is not to be considered as limited to the scope of the embodiments described herein.

The disclosure generally relates to an electronic device, which in the embodiments described herein is a portable electronic device. Examples of portable electronic devices include mobile, or handheld, wireless communication devices such as pagers, cellular phones, cellular smart-phones, wireless organizers, personal digital assistants, wirelessly enabled notebook computers and the like.

The portable electronic device may be a two-way communication device with advanced data communication capabilities including the capability to communicate with other portable electronic devices or computer systems through a network of transceiver stations. The portable electronic device may also have the capability to allow voice communication. Depending on the functionality provided by the portable electronic device, it may be referred to as a data messaging device, a two-way pager, a cellular telephone with data messaging capabilities, a wireless Internet appliance, or a data communication device (with or without telephony capabilities). The portable electronic device may also be a portable device without wireless communication capabilities as a handheld electronic game device, digital photograph album, digital camera and the like.

Reference is first made to the Figures to describe an embodiment of a portable electronic device that includes a base, a touch-sensitive display including a display device and a touch-sensitive overlay connected to a controller and disposed on the display device for detecting a touch event thereon. The touch-sensitive display is connected to and moveable relative to the base. An actuating arrangement including a pad is disposed between the touch-sensitive display and the base. The pad has an expandable region for expanding as a result of compression of the pad due to movement of the touch-sensitive display toward the base. A switch is in communication with the expandable region for actuating as a result of expansion of the expandable region. Operational components including a processor are connected to the controller for operation of the electronic device.

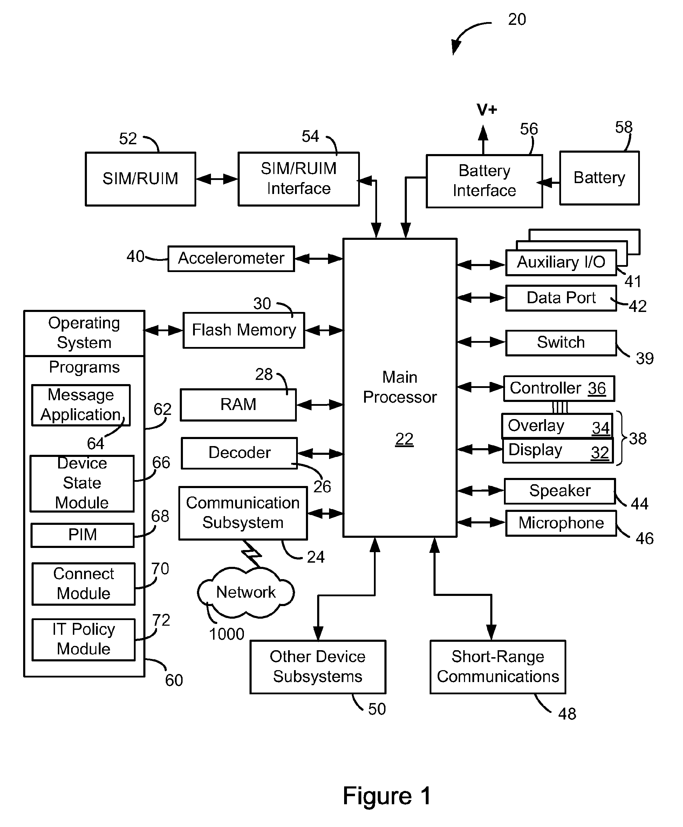

Referring to Figure 1, there is shown therein a block diagram of an example of an embodiment of a portable electronic device 20. The portable electronic device 20 includes a number of components such as the processor 22 that controls the overall operation of the portable electronic device 20. Communication functions, including data and voice communications, are performed through a communication subsystem 24. Data received by the portable electronic device 20 can be decompressed and decrypted by a decoder 26, operating according to any suitable decompression techniques (e.g. YK decompression, and other known techniques) and encryption techniques (e.g. using an encryption technique such as Data Encryption Standard (DES), Triple DES, or Advanced Encryption Standard (AES)). The communication subsystem 24 receives messages from and sends messages to a wireless network 1000. In this embodiment of the portable electronic device 20, the communication subsystem 24 is configured in accordance with the Global System for Mobile Communication (GSM) and General Packet Radio Services (GPRS) standards. The GSM/GPRS wireless network is used worldwide. New standards, such as Enhanced Data GSM Environment (EDGE) and Universal Mobile Telecommunications Service (UMTS) are believed to have similarities to the network behavior described herein, and it will also be understood by persons skilled in the art that the embodiments described herein are intended to use any other suitable standards that are developed in the future. The wireless link connecting the communication subsystem 24 with the wireless network 1000 represents one or more different Radio Frequency (RF) channels, operating according to defined protocols specified for GSM/GPRS communications. With newer network protocols, these channels are capable of supporting both circuit switched voice communications and packet switched data communications.

Although the wireless network 1000 associated with the portable electronic device 20 is a GSM/GPRS wireless network in one example implementation, other wireless networks may also be associated with the portable electronic device 20 in variant implementations. The different types of wireless networks that may be employed include, for example, data-centric wireless networks, voice-centric wireless networks, and dual-mode networks that can support both voice and data communications over the same physical base stations. Combined dual-mode networks include, but are not limited to, Code Division Multiple Access (CDMA) or CDMA2000 networks, GSM/GPRS networks (as mentioned above), and future third-generation (3G) networks like EDGE and UMTS. Some other examples of data-centric networks include WiFi 802.11, Mobitex™ and DataTAC™ network communication systems. Examples of other voice-centric data networks include Personal Communication Systems (PCS) networks like GSM and Time Division Multiple Access (TDMA) systems.

The processor 22 also interacts with additional subsystems such as a Random Access Memory (RAM) 28, a flash memory 30, a display 32 with a touch-sensitive overlay 34 connected to an electronic controller 36 that together make up a touch-sensitive display 38, a switch 39, an accelerometer 40, an auxiliary input/output (I/O) subsystem 41, a data port 42, a speaker 44, a microphone 46, short-range communications 48 and other device subsystems 50. The touch-sensitive overlay 34 and the display device 32 provide a touch-sensitive display 38 and the processor 22 interacts with the touch-sensitive overlay 34 via the electronic controller 36.

Some of the subsystems of the portable electronic device 20 perform communication-related functions, whereas other subsystems may provide "resident" or on-device functions. By way of example, the display 32 and the touch-sensitive overlay 34 may be used for both communication-related functions, such as entering a text message for transmission over the network 1000, and device-resident functions such as a calculator or task list.

The accelerometer 40 includes a cantilever beam with a proof mass and suitable deflection sensing circuitry. The accelerometer 40 is used for detecting direction of gravitational forces (or gravity-induced reaction forces). Movement of the portable electronic device 20 to alternate orientations is detected and the orientation of the accelerometer 40 and therefore of the portable electronic device 20 can be determined.

The portable electronic device 20 can send and receive communication signals over the wireless network 1000 after network registration or activation procedures have been completed. Network access is associated with a subscriber or user of the portable electronic device 20. To identify a subscriber according to the present embodiment, the portable electronic device 20 uses a SIM/RUIM card 52 (i.e. Subscriber Identity Module or a Removable User Identity Module) inserted into a SIM/RUIM interface 54 for communication with a network such as the network 1000. The SIM/RUIM card 52 is one type of a conventional "smart card" that can be used to identify a subscriber of the portable electronic device 20 and to personalize the portable electronic device 20, among other things. In the present embodiment the portable electronic device 20 is not fully operational for communication with the wireless network 1000 without the SIM/RUIM card 52. By inserting the SIM/RUIM card 52 into the SIM/RUIM interface 54, a subscriber can access all subscribed services. Services may include: web browsing and messaging such as e-mail, voice mail, Short Message Service (SMS), and Multimedia Messaging Services (MMS). More advanced services may include: point of sale, field service and sales force automation. The SIM/RUIM card 52 includes a processor and memory for storing information. Once the SIM/RUIM card 52 is inserted into the SIM/RUIM interface 54, it is coupled to the processor 22. In order to identify the subscriber, the SIM/RUIM card 52 can include some user parameters such as an International Mobile Subscriber Identity (IMSI). An advantage of using the SIM/RUIM card 52 is that a subscriber is not necessarily bound by any single physical portable electronic device. The SIM/RUIM card 52 may store additional subscriber information for a portable electronic device as well, including datebook (or calendar) information and recent call information. Alternatively, user identification information can also be programmed into the flash memory 30.

The portable electronic device 20 is a battery-powered device and includes a battery interface 56 for receiving one or more rechargeable batteries 58. In at least some embodiments, the battery 58 can be a smart battery with an embedded microprocessor. The battery interface 56 is coupled to a regulator (not shown), which assists the battery 58 in providing power V+ to the portable electronic device 20. Although current technology makes use of a battery, future technologies such as micro fuel cells may provide the power to the portable electronic device 20.

The portable electronic device 20 also includes an operating system 60 and software components 62 which are described in more detail below. The operating system 60 and the software components 62 that are executed by the processor 22 are typically stored in a persistent store such as the flash memory 30, which may alternatively be a read-only memory (ROM) or similar storage element (not shown). Those skilled in the art will appreciate that portions of the operating system 60 and the software components 62, such as specific software applications 64, 66, 68, 70 and 72, or parts thereof, may be temporarily loaded into a volatile store such as the RAM 28. Other software components can also be included, as is well known to those skilled in the art.

The subset of software components 62 that control basic device operations, including data and voice communication applications, will normally be installed on the portable electronic device 20 during its manufacture. Other software applications include a message application 64 that can be any suitable software program that allows a user of the portable electronic device 20 to send and receive electronic messages. Various alternatives exist for the message application 64 as is well known to those skilled in the art. Messages that have been sent or received by the user are typically stored in the flash memory 30 of the portable electronic device 20 or some other suitable storage element in the portable electronic device 20. In at least some embodiments, some of the sent and received messages may be stored remotely from the device 20 such as in a data store of an associated host system that the portable electronic device 20 communicates with.

The software components 62 can further include a device state module 66, a Personal Information Manager (PIM) 68, and other suitable modules (not shown). The device state module 66 provides persistence, i.e. the device state module 66 ensures that important device data is stored in persistent memory, such as the flash memory 30, so that the data is not lost when the portable electronic device 20 is turned off or loses power.

The PIM 68 includes functionality for organizing and managing data items of interest to the user, such as, but not limited to, e-mail, contacts, calendar events, voice mails, appointments, and task items. The PIM 68 has the ability to send and receive data items via the wireless network 1000. PIM data items may be seamlessly integrated, synchronized, and updated via the wireless network 1000 with the portable electronic device subscriber's corresponding data items stored and/or associated with a host computer system. This functionality creates a mirrored host computer on the portable electronic device 20 with respect to such items. This can be particularly advantageous when the host computer system is the portable electronic device subscriber's office computer system.

The software components 62 also includes a connect module 70, and an information technology (IT) policy module 72. The connect module 70 implements the communication protocols that are required for the portable electronic device 20 to communicate with the wireless infrastructure and any host system, such as an enterprise system, that the portable electronic device 20 is authorized to interface with.

The connect module 70 includes a set of APIs that can be integrated with the portable electronic device 20 to allow the portable electronic device 20 to use any number of services associated with the enterprise system. The connect module 70 allows the portable electronic device 20 to establish an end-to-end secure, authenticated communication pipe with the host system. A subset of applications for which access is provided by the connect module 70 can be used to pass IT policy commands from the host system to the portable electronic device 20. This can be done in a wireless or wired manner. These instructions can then be passed to the IT policy module 72 to modify the configuration of the device 20. Alternatively, in some cases, the IT policy update can also be done over a wired connection.

Other types of software applications can also be installed on the portable electronic device 20. These software applications can be third party applications, which are added after the manufacture of the portable electronic device 20. Examples of third party applications include games, calculators, utilities, etc.

The additional applications can be loaded onto the portable electronic device 20 through at least one of the wireless network 1000, the auxiliary I/O subsystem 41, the data port 42, the short-range communications subsystem 48, or any other suitable device subsystem 50. This flexibility in application installation increases the functionality of the portable electronic device 20 and may provide enhanced on-device functions, communication-related functions, or both. For example, secure communication applications may enable electronic commerce functions and other such financial transactions to be performed using the portable electronic device 20.

The data port 42 enables a subscriber to set preferences through an external device or software application and extends the capabilities of the portable electronic device 20 by providing for information or software downloads to the portable electronic device 20 other than through a wireless communication network. The alternate download path may, for example, be used to load an encryption key onto the portable electronic device 20 through a direct and thus reliable and trusted connection to provide secure device communication.

The data port 42 can be any suitable port that enables data communication between the portable electronic device 20 and another computing device. The data port 42 can be a serial or a parallel port. In some instances, the data port 42 can be a USB port that includes data lines for data transfer and a supply line that can provide a charging current to charge the battery 58 of the portable electronic device 20.

The short-range communications subsystem 48 provides for communication between the portable electronic device 20 and different systems or devices, without the use of the wireless network 1000. For example, the short-range communications subsystem 48 may include an infrared device and associated circuits and components for short-range communication. Examples of short-range communication standards include standards developed by the Infrared Data Association (IrDA), Bluetooth, and the 802.11 family of standards developed by IEEE.

In use, a received signal such as a text message, an e-mail message, or web page download is processed by the communication subsystem 24 and input to the processor 22. The processor 22 then processes the received signal for output to the display 32 or alternatively to the auxiliary I/O subsystem 41. A subscriber may also compose data items, such as e-mail messages, for example, using the touch-sensitive overlay 34 on the display 32 that are part of the touch-sensitive display 38, and possibly the auxiliary I/O subsystem 41. The auxiliary I/O subsystem 41 may include devices such as: a mouse, track ball, infrared fingerprint detector, or a roller wheel with dynamic button pressing capability. A composed item may be transmitted over the wireless network 1000 through the communication subsystem 24.

For voice communications, the overall operation of the portable electronic device 20 is substantially similar, except that the received signals are output to the speaker 44, and signals for transmission are generated by the microphone 46. Alternative voice or audio I/O subsystems, such as a voice message recording subsystem, can also be implemented on the portable electronic device 20. Although voice or audio signal output is accomplished primarily through the speaker 44, the display 32 can also be used to provide additional information such as the identity of a calling party, duration of a voice call, or other voice call related information.

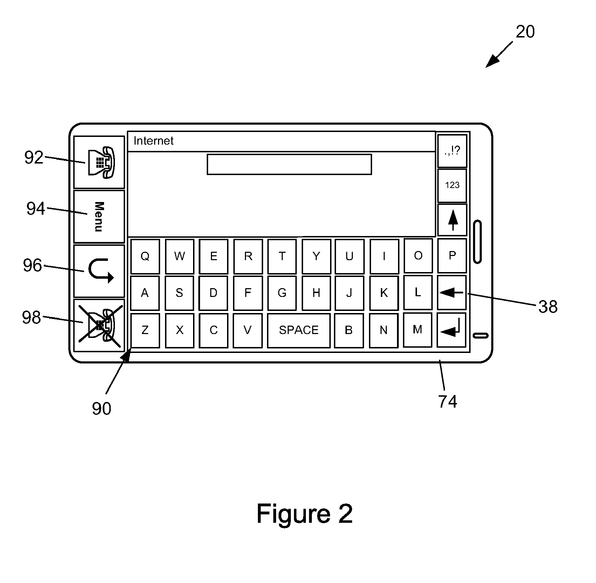

Reference is now made to Figure 2, which shows a front view of an example of a portable electronic device 20 in landscape orientation. The portable electronic device 20 includes a housing 74 that houses the internal components that are shown in Figure 1 and frames the touch-sensitive display 38 such that the touch-sensitive display 38 is exposed for user-interaction therewith when the portable electronic device 20 is in use. In the example orientation shown in Figure 2, the touch-sensitive display 38 includes a graphical user interface that in the present example is a landscape mode virtual keyboard 90 for user entry of data in the form of, for example, text during operation of the portable electronic device 20. It will be appreciated that such a virtual keyboard may be used for data entry in any suitable application such as in an electronic mail application, during electronic mail composition or in any other suitable application. The landscape mode virtual keyboard 90 of Figure 2 is provided for data entry in an Internet browser application and is shown as a reduced keyboard for the purpose of the present example. The present disclosure is not limited to the landscape mode virtual keyboard 90 shown as other keyboards including other full keyboards or reduced keyboards are possible.

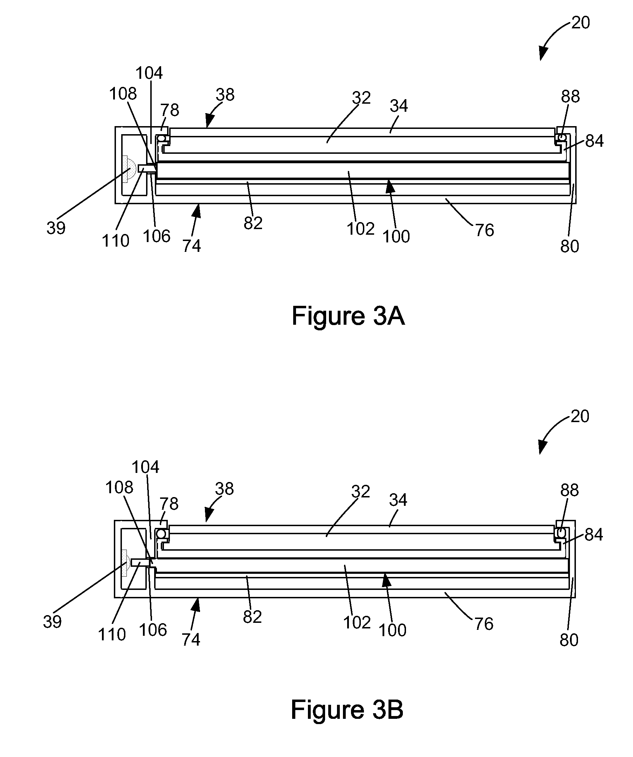

The housing can be any suitable housing for the internal components shown in Figure 1. As best shown in Figures 3A and 3B, the housing 74 in the present example includes a back 76, a frame 78, which frames the touch-sensitive display 38, sidewalls 80 that extend between and generally perpendicular to the back 76 and the frame 78, and a base 82 that is spaced from and generally parallel to the back 76. The base 82 can be any suitable base and can include, for example, a printed circuit board or flex circuit board. The back 76 includes a plate (not shown) that is releasably attached for insertion and removal of, for example, the battery 58 and the SIM/RUIM card 52 described above. It will be appreciated that the back 76, the sidewalls 80 and the frame 78 can be injection molded, for example. In the example of the portable electronic device 20 shown in Figure 2, the frame 78 is generally rectangular with rounded corners although other shapes are possible.

The display 32 and the touch-sensitive overlay 34 can be supported on a support tray 84 of suitable material such as magnesium for providing mechanical support to the display 32 and touch-sensitive overlay 34. The display 32 and touch-sensitive overlay 34 are biased away from the base 82, toward the frame as described further below. Compliant spacers 88, which can be in the form of gel pads for example, are located between an upper portion of the support tray 84 and the frame 78. The touch-sensitive display 38 is moveable within the housing 74 as the touch-sensitive display 38 can be moved toward the base 82. The touch-sensitive display 38 can also be pivoted within the housing 74 with one side of the touch-sensitive display 38 moving toward the base 82.

The touch-sensitive display 38 can be any suitable touch-sensitive display such as a capacitive touch-sensitive display. A capacitive touch-sensitive display 38 includes the display 32 and the touch-sensitive overlay 34, in the form of a capacitive touch-sensitive overlay 34. It will be appreciated that the capacitive touch-sensitive overlay 34 includes a number of layers in a stack and is fixed to the display 32 via a suitable optically clear adhesive. The layers can include, for example a substrate fixed to the display 32 by a suitable adhesive, a ground shield layer, a barrier layer, a pair of capacitive touch sensor layers separated by a substrate or other barrier layer, and a cover layer fixed to the second capacitive touch sensor layer by a suitable adhesive. The capacitive touch sensor layers can be any suitable material such as patterned indium tin oxide (ITO).

In the present example, the X and Y location of a touch event are both determined with the X location determined by a signal generated as a result of capacitive coupling with one of the touch sensor layers and the Y location determined by the signal generated as a result of capacitive coupling with the other of the touch sensor layers. Each of the touch-sensor layers provides a signal to the controller 36 as a result of capacitive coupling, for example, with a finger of a user resulting in a change in the electric field of each of the touch sensor layers. The signals represent the respective X and Y touch location values. It will be appreciated that other attributes of the user's touch on the touch-sensitive display 38 can be determined. For example, the size and the shape of the touch on the touch-sensitive display 38 can be determined in addition to the location (X and Y values) based on the signals received at the controller 36 from the touch sensor layers.

Referring again to Figure 2, it will be appreciated that a user's touch on the touch-sensitive display 38 is determined by determining the X and Y touch location and user-selected input is determined based on the X and Y touch location and the application executed by the processor 22. In the example of the screen shown in the front view of Figure 2, the application provides the virtual keyboard 90 and the button of the virtual keyboard 90 selected by the user is matched to the X and Y touch location. Thus, the button selected by the user is determined based on the X and Y touch location and the application. In the example shown in Figure 2, the user enters text or any other characters via the virtual keyboard 90, selecting letters from the virtual keyboard 90 by touching the touch-sensitive display at the location of the characters on the virtual keyboard 90.

The portable electronic device can include physical buttons such as the four physical buttons 92, 94, 96, 98 shown in the housing 74 for user-selection for performing functions or operations including an "off-hook" button 92 for placing an outgoing cellular telephone call or receiving an incoming cellular telephone call, a Menu button 94 for displaying a context-sensitive menu or submenu, an escape button 96 for returning to a previous screen or exiting an application, and an "on-hook" button 98 for ending a cellular telephone call. The remainder of the buttons shown on the face of the example of the portable electronic device of Figure 2 are virtual buttons of the virtual keyboard 90 on the touch-sensitive display 38.

An actuating arrangement 100 in combination with the touch-sensitive display 38 provides tactile feedback upon application of sufficient force to the touch-sensitive display 38 to cause movement toward the base 82 and collapse of the switch 39. The actuating arrangement 100 includes a pad 102 contained within the housing 74 and disposed between the support tray 84 and the base 82. The pad 102 can be any suitable elastically deformable pad for functioning as described below. In one example, the pad 102 can be a sealed bag filled with a high density fluid for transferring forces as described further herein. In the present example, the housing 74 includes an interior wall 104 and the pad 102 is contained between three sidewalls 80 and the interior wall 104, as shown in Figures 3A and 3B. The interior wall 104 includes a cavity 106 connecting the interior of the housing 74 in which the pad 102 is located and a second portion of the housing 74 between the interior wall 104 and the fourth one of the sidewalls 80, as shown. The pad 102 includes an expandable region 108 adjacent the cavity 106 for expanding into the cavity 106 when a compressive force is applied to pad 102 due to movement of the touch-sensitive display 38 toward the base 82 which results from sufficient force applied to the touch-sensitive display 38 during selection of a feature on the touch-sensitive display 38, for example.

The switch 39, which can be a mechanical dome-type switch, is supported on the fourth one of the sidewalls 80 in the second portion of the housing 74 between the interior wall 104 and the fourth one of the sidewalls 80 and aligned with the cavity 106. An actuating member 110 is located in the cavity 106, between the switch 39 and the expandable region 108. The actuating member 110 can be a rod or other suitable member and can slide along the cavity 106. The switch 39 is in contact with the actuating member 110. Thus, when sufficient force is applied to cause movement of the touch-sensitive display 38 toward the base 82, compressing the pad 102 and resulting in expansion of the expandable region 108 into the cavity 106, the actuating member 110 slides along the cavity 106 in the direction of the switch 39, compressing and causing collapse of the switch 39, as shown in Figure 3B.

It will now be appreciated that force applied to the touch-sensitive display 38 to cause displacement of the touch-sensitive display 38 is transferred through the pad 102 and the actuating member 110 to actuate the switch 39. The pad 102 deforms elastically when compressed as described above. When the applied force on the touch-sensitive display 38 is removed, the pad 102 returns to the rest position shown in Figure 3A and the actuating member 110 slides in the cavity, in the direction away from the fourth one of the sidewalls 80, as the switch 39 returns to the rest position shown in Figure 3A. The pad 102 therefore biases the touch-sensitive display 38 away from the base 82 and into the rest position shown in Figure 3A.

Depression of the touch-sensitive display 38 by user application of a force thereto causing collapse of the switch 39 thereby provides the user with a positive tactile feedback during user interaction with the user interface of the portable electronic device 20. The switch 39 is not collapsed in the rest position shown in Figure 3A, absent applied force by the user. Thus, withdrawal of the applied force on the touch-sensitive display 38 after collapse of the switch 39 causes the switch 39 to release (return to the rest position). The collapse and the release of the switch 39 during actuation provides both an opposing force to the user's force on the touch-sensitive display and can provide an audible click, therefore providing tactile feedback to the user. Although the switch 39 is moved generally perpendicular to the direction of application of force by the user and therefore generally perpendicular to the movement of the touch-sensitive display 38 toward the base 82, tactile feedback is provided by the switch 39.

It will now be appreciated that the switch 39 can be actuated by pressing anywhere on the exposed touch-sensitive display 38 to cause movement of the touch-sensitive display 38 in the form of movement parallel with the base 82 or pivoting of one side of the touch-sensitive display 38 toward the base 82. The switch 39 is connected to the processor 22 and can be used for further input to the processor when actuated.

As indicated, the pad 102 can be, for example, a sealed bag filled with a high density fluid for transferring forces as described. The sealed bag can include a thin-walled portion to provide the expandable region 108 for fluid flow as a result of compression of the sealed bag. The remainder of the sealed bag can be inhibited from expanding by the wall thickness of the sealed bag or by the surrounding housing 74 including the base 82, the three sidewalls 80 and the interior wall 104 as described.

In use, the user can press on the touch-sensitive display 38 to select a feature thereon. The force applied by the user is transferred through the pad 102 and the actuating member 110 to collapse the switch 39, as shown in Figure 3B. When the user lifts his or her finger from the touch-sensitive display 38 after selection of the feature, the touch-sensitive display 38 and the switch 39 both return to the rest position shown in Figure 3A.

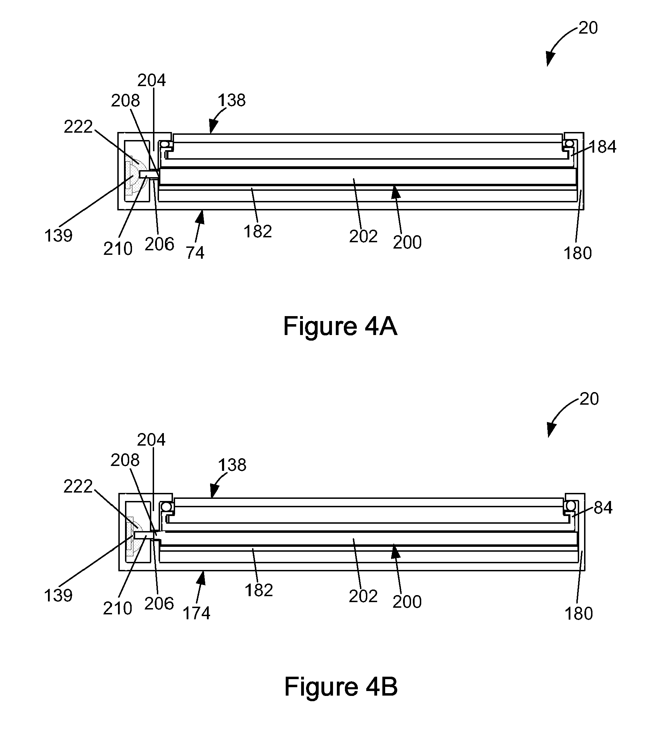

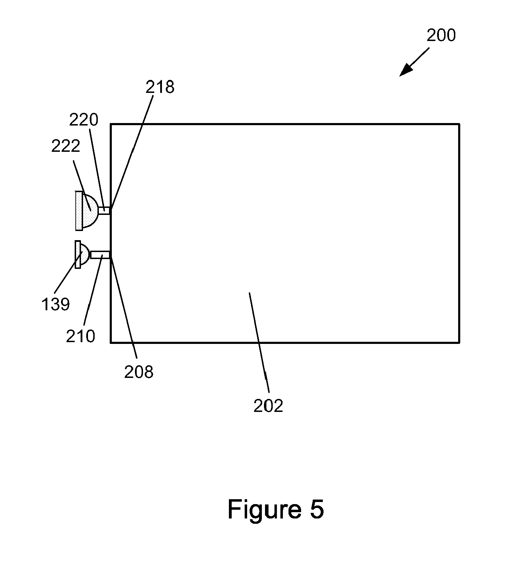

Although a single switch 39 is shown, a further switch or switches can be used. Reference is now made to Figures 4A, 4B and 5 to describe another embodiment of the present disclosure. Many of the features of the present embodiment are similar to those described above. Those features are therefore not described again herein. For the purpose of clarity, the reference numerals used above will be used raised by 100 in describing similar features.

According to the present embodiment, an actuating arrangement 200 in combination with the touch-sensitive display 138 provides tactile feedback upon application of sufficient force to the touch-sensitive display 138 to cause movement toward the base 182. The actuating arrangement 200 includes a pad 202 contained within the housing 174 and disposed between the support tray 184 and the base 182. As described above, the pad 202 can be any suitable elastically deformable pad. In one example, the pad 202 can be a sealed bag filled with a high density fluid for transferring forces as described further herein. The housing 174 includes an interior wall 204 and the pad 202 is contained between three sidewalls 180 and the interior wall 204, as shown in Figures 4A and 4B. The interior wall 204 includes a first cavity 206 connecting the interior of the housing 174 in which the pad 202 is located and a second portion of the housing between the interior wall 204 and the fourth one of the sidewalls 180, as shown. The interior wall 204 also includes a second cavity (hidden behind the first cavity in Figures 4A and 4B) connecting the interior of the housing 174 in which the pad 202 is located and the second portion of the housing 174 between the interior wall 204 and the fourth one of the sidewalls 180.

The pad 202 includes a first expandable region 208 adjacent the first cavity 206 for expanding into the first cavity 206 when a compressive force is applied to pad 202 due to movement of the touch-sensitive display 138 toward the base 182 which results from sufficient force applied to the touch-sensitive display 138 during selection of a feature on the touch-sensitive display 138, for example. The pad 202 also includes a second expandable region 218 adjacent the second cavity for expanding into the second cavity when a compressive force is applied to pad 202 due to movement of the touch-sensitive display 138 toward the base 182 which results from sufficient force applied to the touch-sensitive display 138 during selection of a feature on the touch-sensitive display 138, for example.

In the present example, a first switch 139, which can be a mechanical dome-type switch, is supported on the fourth one of the sidewalls 180 in the second portion of the housing 174 between the interior wall 204 and the fourth one of the sidewalls 180 and is aligned with the first cavity 206. A first actuating member 210 is located in the first cavity 206, between the first switch 139 and the first expandable region 208. The first actuating member 210 can slide along the first cavity 206 and the first switch 139 is in contact with the first actuating member 110. Thus, when sufficient force is applied to cause movement of the touch-sensitive display 138 toward the base 182, compressing the pad 202 and resulting in expansion of the first expandable region 208 into the cavity 206, the first actuating member 210 slides along the first cavity 206 in the direction of the first switch 139, compressing and causing collapse of the first switch 139, as shown in Figure 3B.

A second switch 222, which can also be a mechanical dome-type switch, is supported on the fourth one of the sidewalls 180 in the second portion of the housing 174 between the interior wall 204 and the fourth one of the sidewalls 180 and is aligned with the second cavity 216. A second actuating member 220 is located in the second cavity 216, between the second switch 222 and the second expandable region 218. The second actuating member 220 can slide along the second cavity and the second switch 222 is in contact with the second actuating member 210. Thus, when sufficient force is applied to cause movement of the touch-sensitive display 138 toward the base 182, compressing the pad 202 and resulting in expansion of both the first expandable region 208 into the first cavity and the second expandable region 218 into the second cavity 216, the second actuating member 220 slides along the second cavity in the direction of the second switch 222. In the present embodiment, the second switch 222 is larger than the first switch 139 and requires greater displacement to collapse the second switch 222 than the displacement required to collapse the first switch 139. The first expandable region 208 and the second expandable region 218 are similar and similar expansion occurs at both expandable regions 208, 218 upon depression of the touch-sensitive display 138.

It will now be appreciated that force applied to the touch-sensitive display 138 to cause displacement of the touch-sensitive display 138 is transferred through the pad 202 and the actuating member 210 to both of the first switch 139 and the second switch 222. When sufficient force is applied to the touch-sensitive display 138 to cause displacement of the touch-sensitive display 138, the first switch 139 and the second switch 222 are displaced approximately an equivalent amount. Since the first switch 139 is collapsed with less displacement than that required to collapse the second switch 222, the first switch 139 is collapsed prior to collapse of the second switch 222. Additional force on the touch-sensitive display 138 to cause sufficient further displacement of the touch-sensitive display 138 results in collapse of the second switch 222.

The pad 202 deforms elastically when compressed as described above. When the applied forces on the touch-sensitive display 138 are removed, the first and second expandable regions 208, 218 contract and the first actuating member 210 slides in the first cavity 206, in the direction away from the fourth one of the sidewalls 180. Similarly, the second actuating member 220 slides in the second cavity 216, in the direction away from the fourth one of the sidewalls 180. It will be appreciated that the second switch 222 is released prior to the first switch 139 since greater displacement is required for depressing the second switch 222 as compared to the first switch 139 and therefore less displacement is required for release of the second switch 222. A further reduction in applied force on the touch-sensitive display 138 results in the first switch 139 releasing and therefore both the first and second switches 139, 222 are returned to the rest position shown in Figure 4A.

As in the first embodiment, the pad 202 biases the touch-sensitive display 38 away from the base 82 and into the rest position shown in Figure 4A.

Depression of the touch-sensitive display 138 by user application of a force thereto when pressing with a finger, causes collapse of the first switch 139 thereby providing the user with a positive tactile feedback during user interaction with the user interface of the portable electronic device 20. Further depression of the touch-sensitive display 138 by user application of a force thereto when pressing with a second finger, while the first finger maintains the first applied force, causes collapse of the second switch 222 thereby providing the user with positive tactile feedback.

The collapse and the release of the first switch 139 and the second switch 222 during actuation provides both opposing forces to the user's force on the touch-sensitive display and can provide audible clicks, therefore providing tactile feedback to the user.

It will now be appreciated that the first switch 139 can be collapsed by pressing anywhere on the exposed touch-sensitive display 138 with a first finger to cause movement of the touch-sensitive display 138 in the form of movement parallel with the base 182 or pivoting of one side of the touch-sensitive display 138 toward the base 182. The second switch 222 can be collapsed by pressing anywhere on the exposed touch-sensitive display 138 with a second finger while the first finger maintains a force on the touch-sensitive display 138, to cause further movement of the touch-sensitive display 138.

In use, the user can press on the touch-sensitive display 138 with one finger to select a feature thereon. The force applied by the user when pressing with one finger is transferred through the pad 202 and the first actuating member 210 to collapse the first switch 139, as shown in Figure 4B. The force is also transferred through the pad 202 and the second actuating member 220 to displace the second switch 222. The second switch 222, however, is not collapsed at the same time as the first switch 139. The user can then press on the touch-sensitive display 138 with a second finger while the first finger is still on the touch-sensitive display 138 and applying force to the touch-sensitive display 138. The additional force applied by the user pressing with the second finger, while the first finger is maintained on the touch-sensitive display 138, is transferred through the pad 202 and the second actuating member 220 to further displace and collapse the second switch 222.

When the user lifts the first finger from the touch-sensitive display 38 after selection of the feature, the force on the touch-sensitive display 138 is reduced, the first and second actuating members 210, 220 move with contraction of the first and second expandable regions 208, 218 and the second switch 222 is released. When the user lifts the second finger from the touch-sensitive display 38, assuming that a further finger does not press on the touch-sensitive display 138 and that the first finger is not returned to press on the touch-sensitive display, the first and second actuating members 210, 220 move further with further contraction of the first and second expandable regions 208, 218 and the first switch 139 is released. Both switches 139, 222 return to the rest position when all force is removed from the touch-sensitive display 138, as shown in Figure 4A.

It will be appreciated that while it may be possible to actuate both switches 139, 222 by application of a sufficient force with a single finger on the touch-sensitive display 138, the first switch 139 is collapsed prior to the collapse of the second switch 222. In use, the user recognizes the collapse (of the first switch 139) and begins to lift the finger from the touch-sensitive display 138, making the collapse of both switches 139, 222 with a force from a single finger unlikely during normal operation. The second switch 222 is released prior to release of the first switch 139.

In other embodiments, the pad 202 can include only a single expandable region that communicates with both switches 139, 222 for actuation of both switches. Further, a single actuating member can be used for actuating both switches 139, 222.

While the embodiments described herein are directed to particular implementations of the portable electronic device and the method of controlling the portable electronic device, it will be understood that modifications and variations may occur to those skilled in the art. All such modifications and variations are believed to be within the sphere and scope of the present disclosure.

## Claims

1. A electronic device comprising:
a base;
a touch-sensitive display comprising a display device and a touch-sensitive overlay connected to a controller and disposed on the display device for detecting a touch event thereon, the touch-sensitive display connected to and moveable relative to the base;
an actuating arrangement comprising a pad disposed between the touch-sensitive display and the base, the pad having an expandable region for expanding as a result of compression of the pad due to movement of the touch-sensitive display toward the base;
a switch in communication with the expandable region for actuating as a result of expansion of the expandable region; and
operational components comprising a processor connected to the controller for operation of the electronic device.

2. The electronic device according to claim 1, wherein the pad comprises a bag containing a fluid.

3. The electronic device according to claim 2, wherein the expandable region comprises a thin-walled portion of the bag for expanding as a result of compressive force on the bag.

4. The electronic device according to claim 3, wherein a remainder of the bag is inhibited from expanding by a surrounding housing.

5. The electronic device according to claim 1, wherein the pad is elastically deformable.

6. The electronic device according to any one of claims 1 to 5, wherein said actuating arrangement comprises an actuating member intermediate the expandable region and the switch, the actuating member for actuating the switch due to expansion of the expandable region.

7. The electronic device according to any preceding claim, wherein said expandable region is located along a side of said pad such that the expandable region expands generally perpendicularly to the direction of movement of the touch-sensitive display in relation to the base.

8. The electronic device according to any preceding claim, wherein the switch comprises a dome-type mechanical switch.

9. The electronic device according to any preceding claim comprising a further switch in communication with the expandable region for actuating as a result of further expansion of the expandable region.

10. The electronic device according to claim 9, wherein the further switch comprises a dome-type mechanical switch.

11. The electronic device according to claim 10 when dependent from claim 8, wherein the further switch comprises a larger switch relative to the other switch.

12. The electronic device according to any one of claims 1 to 8 comprising a further switch in communication with a further expandable region for actuating as a result of expansion of the expandable region.

13. The electronic device according to claim 12, wherein the further switch comprises a dome-type mechanical switch.

14. The electronic device according to claim 13 when dependent from claim 8, wherein the further switch comprises a larger switch relative to the other switch.

## Amended claims

### Amended claims in accordance with Rule 137(2) EPC.

**1.** A electronic device (20) comprising:
a base (82, 182);
a touch-sensitive display (38,138) comprising a display device (32) and a touch-sensitive overlay (34) configured to detect a touch event, the touch-sensitive display (38, 138) moveable relative to the base (82, 182); and
a switch (39, 139) actuated by an actuator (100, 200) comprising a pad (102, 202) having an expandable region (108, 208) that actuates the switch (39, 139) as a result of compression of the pad (102, 202) due to movement of the touch-sensitive display (38, 138) toward the base (82, 182).

**2.** The electronic device (20) according to claim 1, wherein the pad (102, 202) comprises a bag containing a fluid.

**3.** The electronic device (20) according to claim 2, wherein the expandable region (108, 208) comprises a thin-walled portion of the bag for expanding as a result of compressive force on the bag.

**4.** The electronic device (20) according to claim 3, wherein a remainder of the bag is inhibited from expanding by a surrounding housing.

**5.** The electronic device (20) according to claim 1, wherein the pad (102, 202) is elastically deformable.

**6.** The electronic device (20) according to any one of claims 1 to 5, wherein the actuator (100, 200) comprises an actuating member (110, 210) intermediate the expandable region (108, 208) and the switch (39, 139), and wherein the actuating member (110, 210) actuates the switch (39, 139) due to expansion of the expandable region (108, 208).

**7.** The electronic device (20) according to any preceding claim, wherein the expandable region (108, 208) is located along a side of the pad (102, 202) such that the expandable region (108, 208) expands generally perpendicularly to the direction of movement of the touch-sensitive display (38, 138) in relation to the base (82, 182).

**8.** The electronic device (20) according to any preceding claim, wherein the switch (39, 139) comprises a dome-type mechanical switch.

**9.** The electronic device (20) according to any preceding claim comprising a further switch (222) and wherein the expandable region (108, 208) actuates the further switch (222) as a result of further expansion of the expandable region (108, 208).

**10.** The electronic device (20) according to claim 9, wherein the further switch (222) comprises a dome-type mechanical switch.

**11.** The electronic device (20) according to claim 10 when dependent from claim 8, wherein the further switch (222) comprises a larger switch relative to the other switch (39, 139).

**12.** The electronic device (20) according to any one of claims 1 to 8 comprising a further switch (222) and wherein the pad (102, 202) has a further expandable region (218) that actuates the further switch (222) as a result of expansion of the expandable region (108, 208).

**13.** The electronic device (20) according to claim 12, wherein the further switch (222) comprises a dome-type mechanical switch.

**14.** The electronic device (20) according to claim 13 when dependent from claim 8, wherein the further switch (222) comprises a larger switch relative to the other switch (29, 139).
